# FASCICULE DE BREVET EUROPEEN

(11) **EP 4 001 676 B1**
(45) Date de publication et mention de la délivrance du brevet: **30.08.2023**
(21) Numéro de dépôt: 21208739.9
(22) Date de dépôt: 17.11.2021
(51) Int. Cl.: F16B 39/10, F16B 39/284

(54) **ÉCROU DE FREINAGE ET FIXATION ASSOCIÉE**
BREMSMUTTER UND ENTSPRECHENDE BEFESTIGUNG
BRAKING NUT AND ASSOCIATED ATTACHMENT

(30) Priorité: 19.11.2020 FR 2011880
(43) Date de publication de la demande: 25.05.2022
(73) Titulaire: Lisi Aerospace, 75012 Paris (FR)
(72) Inventeur: GOYER, Julien, 95210 SAINT GRATIEN (FR); SOTOU-BERE, Batoubie, 95300 PONTOISE (FR)
(74) Mandataire: Lavoix

(56) Documents cités:
- WO-A1-2010/085030
- CH-A- 425 354
- US-A- 3 275 054
- US-A- 3 674 075
- US-A1- 2018 135 686

## Description

La présente invention concerne un écrou de freinage, du type comportant un corps et un perçage traversant ledit corps selon un axe principal, le corps comprenant : une face d'appui sensiblement perpendiculaire à l'axe principal ; une surface d'entraînement ; et au moins un orifice traversant, s'étendant sensiblement perpendiculairement à l'axe principal à partir de la surface radiale d'entraînement.

L'invention s'applique particulièrement aux écrous utilisés dans des fixations aéronautiques.

Le freinage d'une fixation de type vis/écrou a pour but d'éviter un dévissage intempestif de l'écrou après installation de la fixation. Plusieurs méthodes de freinage sont connues. Une première méthode dite « freinage à fil » consiste à relier plusieurs fixations à l'aide d'une torsade de fil métallique, ledit fil passant dans un orifice de chacun des écrous, l'orifice étant réalisé au travers de deux surfaces d'entrainement adjacentes. Les écrous sont ainsi bloqués en rotation les uns par rapport aux autres.

Une autre méthode de freinage consiste à déformer les surfaces d'entraînement de l'écrou en deux ou trois points afin de donner au taraudage une forme elliptique, comme dans les documents US 2686546 ou US2754871.

Il est avantageux de configurer les écrous de freinage de sorte à conserver un couple de freinage suffisant après plusieurs cycles de montage/démontage de la fixation. A cet effet, il est connu de munir les écrous d'une jupe de freinage cylindrique, de section plus faible que le corps de l'écrou. La jupe est freinée en plusieurs points pour lui donner une forme elliptique, comme dans le document FR 1183581. Cette jupe est plus souple que le corps de l'écrou et se déforme élastiquement quelques fois, contrairement au corps de l'écrou qui est relativement plus rigide.

Cependant, une telle solution implique de conférer à l'écrou une hauteur plus importante, ou encore de réduire la hauteur de prise de clé, c'est-à-dire de la surface d'entraînement dudit écrou. Le couple de serrage applicable à l'écrou peut alors s'avérer insuffisant.

Un système de freinage d'un écrou est connu de WO 2010/085030 A1.

La présente invention a pour but de résoudre ces problèmes. A cet effet, l'invention a pour objet un écrou de freinage du type précité et selon la revendication 1, dans lequel : le corps comporte en outre une jupe de freinage de forme elliptique, s'étendant selon l'axe principal à l'opposé de la surface d'appui par rapport à la surface d'entraînement ; et la surface d'entraînement comporte une zone supérieure et une zone inférieure, adjacentes selon l'axe principal, la zone inférieure étant située entre la zone supérieure et la surface d'appui ; un périmètre de la zone inférieure autour de l'axe principal étant plus important qu'un périmètre de la zone supérieure ; l'au moins un orifice traversant s'étendant à partir de la zone supérieure.

Suivant d'autres aspects avantageux de l'invention, l'écrou de freinage comporte l'une ou plusieurs des caractéristiques suivantes, prises isolément ou suivant toutes les combinaisons techniquement possibles :
- la surface d'entraînement comporte une série de premiers méplats et une série de seconds méplats, parallèles à l'axe principal ; les premiers méplats s'étendant sur les zones supérieure et inférieure, les seconds méplats s'étendant uniquement sur la zone inférieure ;
- la zone inférieure comporte des premières et deuxièmes intersections entre les méplats adjacents, chaque première intersection formant une surface convexe et chaque deuxième intersection formant une surface concave ;
- l'au moins un orifice traversant s'étend dans la zone supérieure entre deux premiers méplats adjacents ;
- l'écrou comprend en outre une embase élargie, disposée entre la surface d'appui et la zone inférieure de la surface d'entraînement.

L'invention se rapporte en outre à une fixation comprenant : un écrou tel que décrit ci-dessus ; et une tige filetée, apte à s'assembler à un taraudage du perçage traversant de l'écrou.

L'invention se rapporte en outre à un ensemble comprenant : une fixation telle que décrite ci-dessus ; et un fil métallique, apte à être passé dans l'au moins un orifice traversant de l'écrou.

L'invention sera mieux comprise à la lecture de la description qui va suivre, donnée uniquement à titre d'exemple non limitatif et faite en se référant aux dessins sur lesquels :
[Fig 1] la figure 1 est une vue de face d'un écrou selon un mode de réalisation de l'invention ;
[Fig 2] la figure 2 est une vue de dessus de l'écrou de la figure 1 ;
[Fig 3] la figure 3 est une vue en coupe de l'écrou des figures 1 et 2 ; et
[Fig 4] la figure 4 est une vue en coupe partielle d'un assemblage comprenant l'écrou des figures 1 à 3.

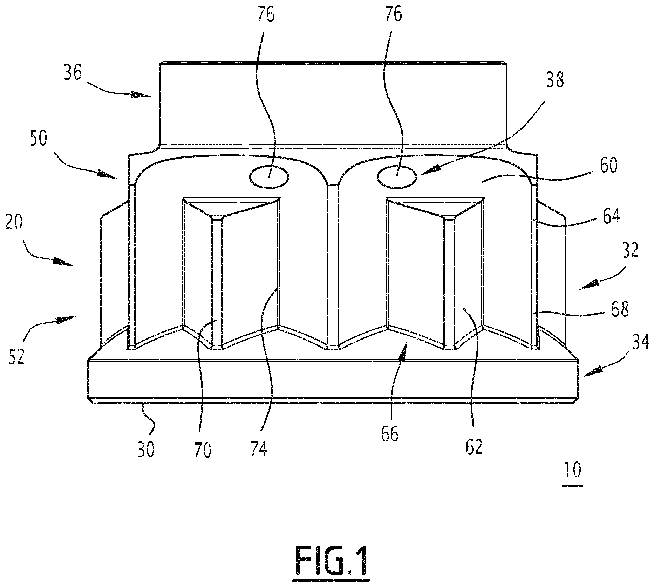

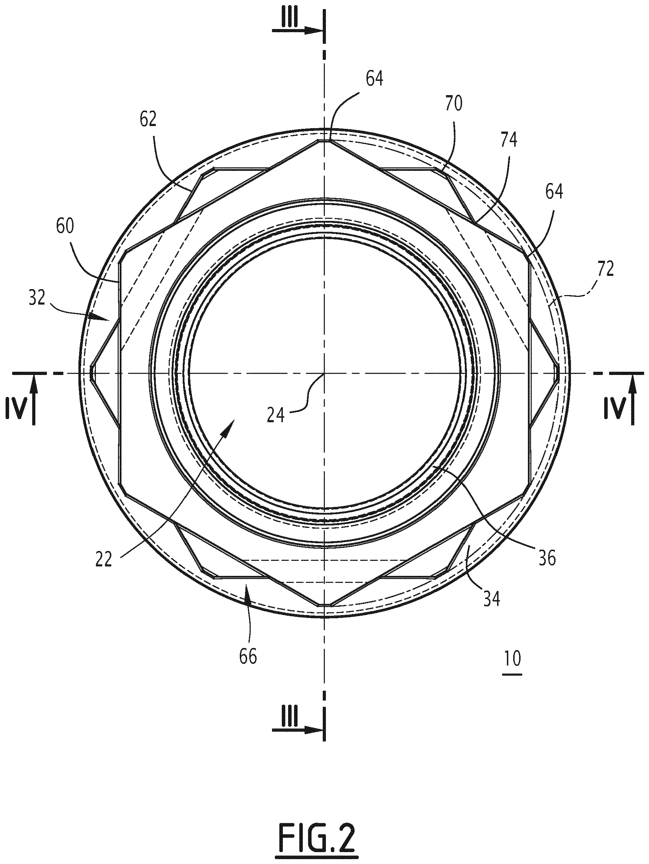

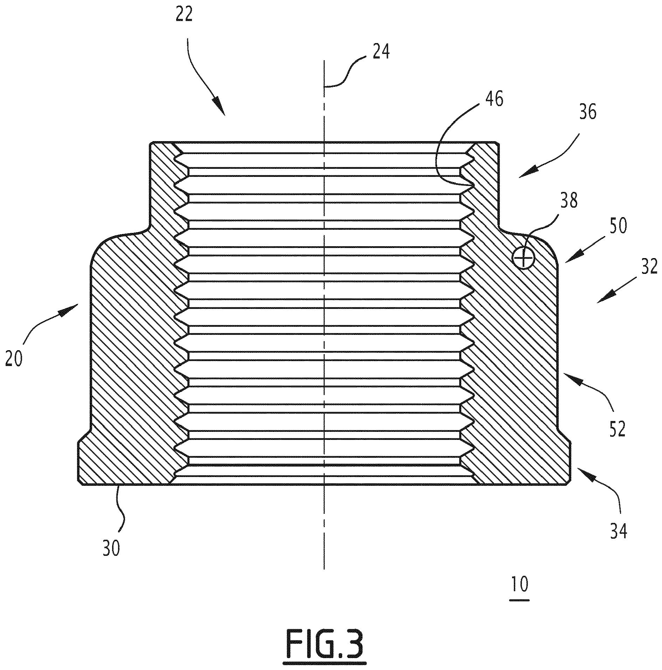

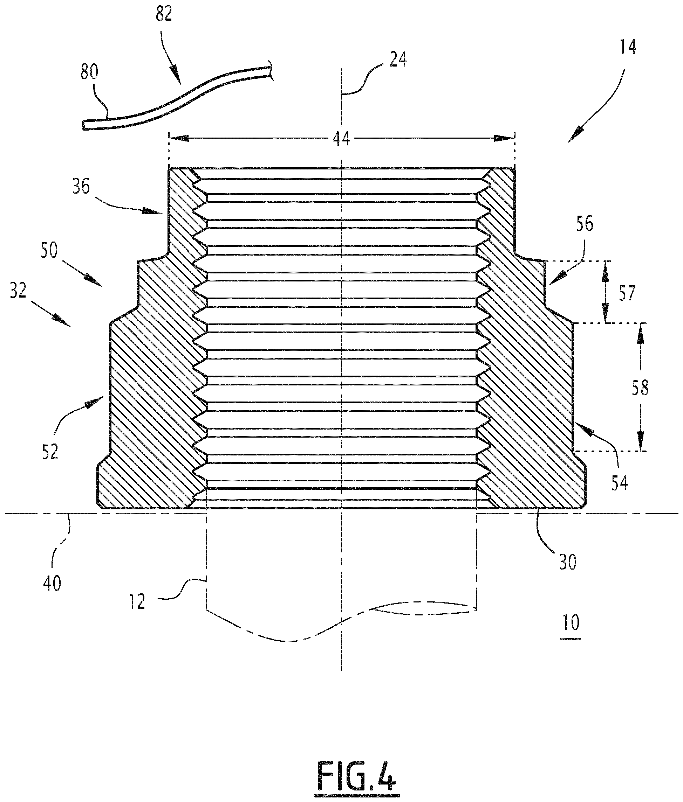

Les figures 1 à 4 représentent un écrou 10 selon un mode de réalisation de l'invention. Ledit écrou est destiné à être assemblé à une tige 12 filetée, visible à la figure 4, pour former une fixation 14.

L'écrou 10 comprend un corps 20 et un perçage 22 traversant ledit corps selon un axe principal 24.

Le corps 20 de l'écrou comprend : une face d'appui 30 ; une surface d'entraînement 32 ; une embase 34 ; une jupe de freinage 36 ; et un orifice traversant 38.

La face d'appui 30 est destinée à prendre appui sur une surface d'une structure 40 (figure 4) assemblée à la fixation 14. La face d'appui 30 est sensiblement plane et perpendiculaire à l'axe principal 24.

La surface d'entraînement 32, ou prise de clé, s'étend autour de l'axe principal 24 et est destinée au vissage/dévissage de l'écrou au moyen d'un outil. La surface d'entraînement 32 sera décrite plus en détails ci-après.

L'embase 34, optionnelle, est disposée entre la surface d'entraînement 32 et la face d'appui 30. L'embase a une forme sensiblement tronconique qui s'évase à partir de la surface d'entraînement 32.

La jupe de freinage 36 prolonge la surface d'entraînement 32 par rapport à l'axe principal 24, à l'opposé de l'embase 34 ou de la face d'appui 30. Un diamètre externe 44 de la jupe de freinage 36 est inférieur ou égal, de préférence sensiblement égal, à une dimension radiale minimale de la surface d'entraînement 32. La jupe de freinage présente une forme légèrement elliptique.

L'orifice traversant 38 s'étend sensiblement perpendiculairement à l'axe principal 24 à partir de la surface d'entraînement 32. L'orifice traversant 38 sera décrit plus en détail ci-après.

Le perçage 22 est défini par une paroi interne 46 du corps 20. Ladite paroi interne est sensiblement cylindrique de révolution et munie d'un taraudage, apte à coopérer avec le filetage de la tige 12.

La surface d'entraînement 32 va maintenant être décrite. La surface d'entraînement 32 comporte une zone supérieure 50 et une zone inférieure 52, adjacentes selon l'axe principal 24. La zone inférieure 52 est située entre la zone supérieure 50 et l'embase 34, ou la face d'appui 30 si l'embase est omise.

Un périmètre 54 de la zone inférieure 52 autour de l'axe principal 24 est plus important qu'un périmètre 56 de la zone supérieure 50. Le périmètre 54, 56 est considéré sur une section de l'écrou 10 perpendiculairement à l'axe principal 24.

La zone supérieure 50 et la zone inférieure 52 présentent respectivement une hauteur 57 et une hauteur 58 selon l'axe principal 24.

Comme il sera décrit ci-après, l'orifice traversant 38 est situé dans la zone supérieure 50. Comme il sera décrit ci-après, la hauteur 57 de la zone supérieure 50 est notamment choisie pour permettre l'aménagement dudit orifice traversant.

Dans le mode de réalisation représenté, la surface d'entraînement 32 comporte une série de premiers pans ou méplats 60 et une série de seconds pans ou méplats 62. Les premiers 60 et seconds 62 méplats sont parallèles à l'axe principal 24.

Plus précisément, la surface d'entraînement 32 comporte six premiers méplats 60 de dimensions identiques, répartis angulairement de manière régulière autour de l'axe principal 24. La surface d'entraînement 32 comporte en outre six premières arêtes 64, séparant deux à deux les premiers méplats 60. De manière connue, les deux premiers méplats 60 de part et d'autre d'une première arête 64 définissent une surface convexe.

Les premiers méplats 60 et les premières arêtes 64 s'étendent à la fois sur la zone supérieure 50 et sur la zone inférieure 52 de la surface d'entraînement 32.

En outre, la surface d'entraînement comporte douze seconds méplats 62 de dimensions identiques. Les seconds méplats 62 forment six paires 66 réparties angulairement de manière régulière autour de l'axe principal 24. Plus précisément, chaque paire 66 de seconds méplats 62 est disposée sensiblement au milieu d'un premier méplat 60, à égale distance des premières arêtes 64 délimitant ledit premier méplat. Chaque paire 66 de seconds méplats 62 forme une saillie radiale par rapport au premier méplat 60 correspondant.

Les seconds méplats 62 s'étendent uniquement sur la zone inférieure 52 de la surface d'entraînement 32 et présentent une hauteur inférieure à la hauteur des premiers méplats.

La surface d'entraînement 32 comporte en outre six deuxièmes arêtes 70. Chaque deuxième arête 70 sépare deux seconds méplats 62 d'une même paire 66, définissant une surface convexe.

Les premières 64 et deuxièmes 70 arêtes sont tangentes à un même cylindre enveloppe 72 de base circulaire, centré sur l'axe principal 24.

La surface d'entraînement 32 comporte en outre douze troisièmes arêtes 74. Chaque troisième arête 74 sépare un premier 60 et un second 62 méplats adjacents, définissant une surface concave.

Les deuxièmes 70 et troisièmes 74 arêtes s'étendent uniquement dans la zone inférieure 52 de la surface d'entraînement 32.

En d'autres termes, la zone supérieure 50 de la surface d'entraînement 32 est une surface à six pans, tandis que la zone inférieure 52 de ladite surface d'entraînement est une surface bi-hexagonale.

Dans le mode de réalisation représenté, l'orifice traversant 38 s'étend entre deux premiers méplats 60 adjacents. Plus précisément, l'orifice traversant 38 s'étend entre deux extrémités 76, chaque extrémité débouchant sur l'un desdits premiers méplats 60 adjacents.

Ainsi, l'orifice traversant 38 est disposé à l'écart du perçage 22 et ne débouche pas sur ledit perçage.

L'orifice traversant 38 est sensiblement rectiligne entre les deux extrémités 76 et s'étend dans un plan perpendiculaire à l'axe principal 24.

Une telle configuration est rendue possible par la surface à six pans formée par la zone supérieure 50. En effet, la surface bi-hexagonale de la zone inférieure 52 ne permet pas l'aménagement des extrémités 76 de l'orifice traversant 38.

La hauteur 57 de la zone supérieure 50 est choisie pour permettre l'aménagement de l'orifice traversant 38. Par exemple, pour un écrou en inox 1100 MPa ayant un taraudage de diamètre 10/16 de pouces, une distance entre deux méplats opposés de 18,82 mm, la hauteur 57 est de 2,2 mm. Une telle hauteur 57 permet le perçage d'un orifice 38 de diamètre 1,2 mm, et une hauteur 58 de 5,4 mm pour la zone inférieure 52. Un tel écrou permet de passer un couple de 320 N.m.

De préférence, le corps 20 comprend plusieurs orifices traversants 38 sensiblement identiques et répartis angulairement autour de l'axe principal 24. Dans le mode de réalisation représenté, le corps 20 comporte trois orifices traversants 38 identiques, sensiblement disposés aux sommets d'un triangle équilatéral centré sur l'axe principal 24.

Un procédé d'utilisation de l'écrou 10 et de la tige filetée 12 va maintenant être décrit. La tige 12 filetée est insérée dans un alésage de la structure 40 et l'écrou 10 est vissé sur une extrémité de ladite tige, au moyen d'un outil approprié (non représenté) coopérant avec la surface d'entraînement 32.

En particulier, la surface de la zone inférieure 52 correspond à une plus grande surface de contact avec l'outil, de sorte à transmettre un couple de serrage important.

Dans le mode de réalisation représenté, la surface bi-hexagonale de la zone inférieure 52 coopère avec un outil (non représenté) de forme complémentaire à ladite surface. L'outil coopère également avec les premiers méplats 60 au niveau de la zone supérieure 50, à proximité des premières arêtes 64, ce qui contribue à augmenter le couple de serrage.

La fixation 14 étant ainsi installée, le freinage à fil est par exemple réalisé comme suit : une première extrémité 80 d'un fil métallique 82 (figure 4) est introduite dans le ou l'un des orifices traversants 38. Le fil métallique 82 peut être enroulé autour d'un point d'accroche à la surface de la structure 40, tel qu'une autre fixation 14 (non représentée). Une seconde extrémité du fil 82 peut ensuite être torsadée à la première extrémité 80 ou attachée à un autre point d'accroche.

L'écrou 10 est ainsi bloqué en rotation par le fil métallique 82 par rapport à la surface de la structure 40.

Ainsi, l'écrou 10 offre un couple de serrage optimisé, un freinage performant autorisant plusieurs cycles de montage / démontage, tout en minimisant la hauteur de l'écrou et en permettant l'aménagement d'un orifice 38 pour le fil frein 82 sur la surface d'entraînement 32 dudit écrou.

## Revendications

1. Ecrou (10) de freinage, comprenant un corps (20) et un perçage (22) traversant ledit corps selon un axe principal (24), le corps comprenant : une face d'appui (30) sensiblement perpendiculaire à l'axe principal ; une surface (32) d'entraînement ; et au moins un orifice traversant (38), s'étendant sensiblement perpendiculairement à l'axe principal à partir de la surface radiale d'entraînement ;
l'écrou étant **caractérisé en ce que** :
- le corps comporte en outre une jupe (36) de freinage de forme elliptique, s'étendant selon l'axe principal à l'opposé de la surface d'appui par rapport à la surface d'entraînement ; et
- la surface d'entraînement comporte une zone supérieure (50) et une zone inférieure (52), adjacentes selon l'axe principal, la zone inférieure étant située entre la zone supérieure et la surface d'appui ; un périmètre (54) de la zone inférieure autour de l'axe principal étant plus important qu'un périmètre (56) de la zone supérieure ;
l'au moins un orifice traversant (38) s'étendant à partir de la zone supérieure (50).

2. Ecrou selon la revendication 1, dans lequel la surface d'entraînement (32) comporte une série de premiers méplats (60) et une série de seconds méplats (62), parallèles à l'axe principal ; les premiers méplats s'étendant sur les zones supérieure (50) et inférieure (52), les seconds méplats s'étendant uniquement sur la zone inférieure (52).

3. Ecrou selon la revendication 2, dans lequel la zone inférieure (52) comporte des premières (70) et deuxièmes (74) intersections entre les méplats(60, 62) adjacents, chaque première intersection formant une surface convexe et chaque deuxième intersection formant une surface concave.

4. Ecrou selon la revendication 2 ou la revendication 3, dans lequel l'au moins un orifice traversant (38) s'étend dans la zone supérieure (50) entre deux premiers méplats (60) adjacents.

5. Ecrou selon l'une des revendications précédentes, comprenant en outre une embase (34) élargie, disposée entre la surface d'appui (30) et la zone inférieure (52) de la surface d'entraînement.

6. Fixation (14) comprenant : un écrou (10) selon l'une des revendications précédentes ; et une tige (12) filetée, apte à s'assembler à un taraudage du perçage traversant (22) de l'écrou.

7. Ensemble comprenant : une fixation (14) selon la revendication 6 ; et un fil (82) métallique, apte à être passé dans l'au moins un orifice traversant (38) de l'écrou (10).

## Patentansprüche

1. Bremsmutter (10), umfassend einen Körper (20) und eine Bohrung (22), die den Körper entlang einer Hauptachse (24) durchquert, der Körper umfassend: eine Anlagefläche (30), die im Wesentlichen senkrecht zu der Hauptachse ist; eine Mitnahmefläche (32); und mindestens eine Durchgangsöffnung (38), die sich im Wesentlichen senkrecht zu der Hauptachse ausgehend von der radialen Mitnahmefläche erstreckt;
wobei die Mutter **dadurch gekennzeichnet ist, dass**:
- der Körper ferner eine Bremsschürze (36) elliptischer Form aufweist, die sich entlang der Hauptachse gegenüber der Auflagefläche in Bezug auf die Antriebsfläche erstreckt; und
- wobei die Antriebsfläche einen oberen Bereich (50) und einen unteren Bereich (52) umfasst, die entlang der Hauptachse angrenzen, wobei sich der untere Bereich zwischen dem oberen Bereich und der Anlagefläche befindet; wobei ein Umfang (54) des unteren Bereichs um die Hauptachse größer ist als ein Umfang (56) des oberen Bereichs;
sich die mindestens eine Durchgangsöffnung (38) ausgehend von dem oberen Bereich (50) erstreckt.

2. Mutter nach Anspruch 1, wobei die Antriebsfläche (32) eine Reihe von ersten Abflachungen (60) und eine Reihe von zweiten Abflachungen (62) aufweist, die parallel zu der Hauptachse sind; wobei sich die ersten Abflachungen über den oberen (50) und den unteren (52) Bereich erstrecken und sich die zweiten Abflachungen nur über den unteren Bereich (52) erstrecken.

3. Mutter nach Anspruch 2, wobei der untere Bereich (52) einen ersten (70) und einen zweiten (74) Schnittpunkt zwischen benachbarten Abflachungen (60, 62) umfasst, wobei jeder erste Schnittpunkt eine konvexe Fläche bildet und jeder zweite Schnittpunkt eine konkave Fläche bildet.

4. Mutter nach Anspruch 2 oder 3, wobei sich die mindestens eine Durchgangsöffnung (38) zwischen zwei benachbarten ersten Abflachungen (60) in den oberen Bereich (50) erstreckt.

5. Mutter nach einem der vorherigen Ansprüche, ferner umfassend einen vergrößerten Ansatz (34), der zwischen der Anlagefläche (30) und dem unteren Bereich (52) der Antriebsfläche angeordnet ist.

6. Befestigungselement (14), umfassend: eine Mutter (10) nach einem der vorherigen Ansprüche; und eine Gewindestange (12), die geeignet ist, um mit einem Innengewinde der Durchgangsbohrung (22) der Mutter zusammenzupassen.

7. Anordnung, umfassend: eine Befestigung (14) nach Anspruch 6; und einen Draht (82) aus Metall, der geeignet ist, um durch mindestens eine Durchgangsöffnung (38) der Mutter (10) geführt zu werden.

## Claims

1. Locking nut (10), comprising a body (20) and a bore (22) passing through said body along a main axis (24), the body comprising: a bearing face (30) substantially perpendicular to the main axis; a drive surface (32); and at least one through-hole (38) extending substantially perpendicular to the main axis from the radial drive surface;
said nut being **characterized in that**:
- the body further comprises a locking collar (36) of elliptical shape, extending along the main axis away from the bearing surface relative to the drive surface; and
- the drive surface comprises an upper region (50) and a lower region (52), adjacent along the main axis, the lower region being situated between the upper region and the bearing surface; a perimeter (54) of the lower region around the main axis being larger than a perimeter (56) of the upper region;
the at least one through-hole (38) extending from the upper region (50).

2. A nut according to Claim 1, wherein the drive surface (32) has a series of first flats (60) and a series of second flats (62), parallel to the main axis; the first flats extending over the upper (50) and lower (52) regions, the second flats extending only over the lower region (52).

3. A nut according to Claim 2, wherein the lower region (52) comprises first (70) and second (74) intersections between adjacent flats (60, 62), each first intersection forming a convex surface and each second intersection forming a concave surface.

4. A nut according to Claim 2 or Claim 3, wherein the at least one through-hole (38) extends into the upper region (50) between two adjacent first flats (60).

5. A nut according to one of the preceding claims, further comprising a base (34) arranged between the bearing surface (30) and the lower region (52) of the drive surface.

6. A fastener (14) comprising: a nut (10) according to one of the preceding claims; and a threaded rod (12), suitable for being assembled with an internal thread of the through-hole (22) of the nut.

7. An assembly comprising: a fastener (14) according to Claim 6; and a metal wire (82), able to be passed through the at least one through-hole (38) of the nut (10).
